(19) Europäisches Patentamt
European Patent Office
Office européen des brevets

(11) **EP 3 625 160 B1**

(12) # EUROPÄISCHE PATENTSCHRIFT

(45) Veröffentlichungstag und Bekanntmachung des Hinweises auf die Patenterteilung:
**07.07.2021 Patentblatt 2021/27**

(21) Anmeldenummer: **18721073.7**

(22) Anmeldetag: **08.05.2018**

(51) Int Cl.:
**B66B 1/34** $^{(2006.01)}$

(86) Internationale Anmeldenummer:
**PCT/EP2018/061850**

(87) Internationale Veröffentlichungsnummer:
**WO 2018/210627 (22.11.2018 Gazette 2018/47)**

(54) **SYSTEM UND VERFAHREN ZUR BESTIMMUNG DER POSITION EINER AUFZUGKABINE EINER AUFZUGANLAGE**

SYSTEM AND METHOD FOR DETERMINING THE POSITION OF AN ELEVATOR CAR OF A LIFT ASSEMBLY

SYSTÈME ET PROCÉDÉ DE DÉTERMINATION DE LA POSITION DE LA CABINE D'UN ASCENSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2017 EP 17171820**

(43) Veröffentlichungstag der Anmeldung:
**25.03.2020 Patentblatt 2020/13**

(73) Patentinhaber: **Inventio AG**
**6052 Hergiswil (CH)**

(72) Erfinder:
• **BITZI, Raphael**
**6003 Luzern (CH)**
• **SCHERRER, Daniel**
**8052 Zürich (CH)**
• **RÜEGG, André**
**8302 Kloten (CH)**
• **BROSSI, Steven**
**8152 Glattpark (Opfikon) ZH (CH)**

(56) Entgegenhaltungen:
**EP-A1- 1 232 988      WO-A1-2016/096697**
**WO-A1-2016/096698**

**Beschreibung**

Die Erfindung betrifft ein System zur Bestimmung der Position einer in einem Aufzugschacht verfahrbar angeordneten Aufzugkabine einer Aufzuganlage gemäss dem Oberbegriff des Anspruchs 1 und ein Verfahren zur Bestimmung der Position einer in einem Aufzugschacht verfahrbar angeordneten Aufzugkabine einer Aufzuganlage gemäss dem Oberbegriff des Anspruchs 10.

Die EP 1 232 988 A1 beschreibt ein System und ein Verfahren zur Bestimmung der Position einer in einem Aufzugschacht verfahrbar angeordneten Aufzugkabine einer Aufzuganlage. Eine an der Aufzugkabine angeordnete Bilderfassungseinheit erfasst dazu Bilddaten einer als Schachtausrüstung geltenden Führungsschiene im Aufzugschacht und übermittelt diese an eine Recheneinheit. Die Recheneinheit extrahiert aus den Bilddaten der Bilderfassungseinheit ein aus einzelnen Pixeln bestehendes eindimensionales Bild in Form eines in Fahrtrichtung der Aufzugkabine orientierten Bildvektors. Dieses aktuelle Bild wird mit einem gespeicherten Bild in Form eines eindimensionalen, in Fahrtrichtung orientierten Vergleichs-Bildvektors in Fahrtrichtung verglichen, indem der aktuelle Bildvektor in Fahrtrichtung pixelweise über den Vergleichs-Bildvektor geschoben und mit diesem verglichen wird. Aus dem Vergleich der beiden Bildvektoren kann die Position der Aufzugkabine in Fahrtrichtung im Aufzugschacht ermittelt werden.

Demgegenüber ist es insbesondere die Aufgabe der Erfindung, ein System und ein Verfahren zur Bestimmung der Position einer Aufzugkabine einer Aufzuganlage vorzuschlagen, welche eine besonders robuste Bestimmung der Position der Aufzugkabine ermöglichen, ohne dass ein Vorsehen von speziellen Codemarken notwendig wäre, welche nur für die Positionsbestimmung erforderlich sind. Erfindungsgemäss wird diese Aufgabe mit einem System mit den Merkmalen des Anspruchs 1 und einem Verfahren mit den Merkmalen des Anspruchs 10 gelöst.

Das erfindungsgemässe System zur Bestimmung der Position einer in einem Aufzugschacht verfahrbar angeordneten Aufzugkabine einer Aufzuganlage verfügt über eine Recheneinheit und eine Bilderfassungseinheit, welche an der Aufzugkabine angeordnet ist. Die Bilderfassungseinheit ist dazu ausgebildet, aus einzelnen Pixeln bestehende Bilder von anderen Funktionen dienenden Schachtbauteilen oder Schachtausrüstungen aufzunehmen und an die Recheneinheit zu übermitteln. Die Recheneinheit ist dazu ausgebildet, ein aktuell aufgenommenes Bild mit wenigstens einem gespeicherten Vergleichsbild der genannten Schachtbauteile oder Schachtausrüstungen in Fahrtrichtung der Aufzugkabine zu vergleichen, um eine aktuelle Position der Aufzugkabine in Fahrtrichtung zu ermitteln. Unter einem Vergleich in Fahrtrichtung soll hier verstanden werden, dass das aktuell aufgenommene Bild bzw. zumindest ein Teil davon und das Vergleichsbild bzw. zumindest ein Teil davon in oder entgegen der Fahrtrichtung pixelweise gegeneinander verschoben und verglichen werden. Bei jedem der genannten Vergleiche haben das aktuell aufgenommene Bild und das Vergleichsbild eine andere Vergleichsposition zueinander. Für jede Vergleichsposition wird beispielsweise die so genannte Summe der quadratischen Abstände, die so genannte globale lineare Kreuzkorrelation oder eine vergleichbare Kenngrösse des aktuell aufgenommenen Bilds und des Vergleichsbilds bestimmt. Die so ermittelte Kenngrösse ist ein Mass für die Übereinstimmung oder Ähnlichkeit des aktuell aufgenommenen Bilds und des Vergleichsbilds.

Erfindungsgemäss ist die Recheneinheit dazu ausgebildet, das aktuell aufgenommene Bild mit dem gespeicherten Vergleichsbild auch quer zur Fahrtrichtung zu vergleichen, um die aktuelle Position der Aufzugkabine in Fahrtrichtung zu ermitteln.

Beim erfindungsgemässen Verfahren zur Bestimmung der Position einer in einem Aufzugschacht verfahrbar angeordneten Aufzugkabine einer Aufzuganlage werden mit einer an der Aufzugkabine angeordneten Bilderfassungseinheit aus einzelnen Pixeln bestehende Bilder von anderen Funktionen dienenden Schachtbauteilen oder Schachtausrüstungen aufgenommen. Ein aktuell aufgenommenes Bild wird mit wenigstens einem gespeicherten Vergleichsbild der genannten Schachtbauteile oder Schachtausrüstungen in Fahrtrichtung der Aufzugkabine verglichen, um eine aktuelle Position der Aufzugkabine in Fahrtrichtung zu ermitteln.

Erfindungsgemäss wird das aktuell aufgenommene Bild mit dem gespeicherten Vergleichsbild auch quer zur Fahrtrichtung verglichen, um die aktuelle Position der Aufzugkabine in Fahrtrichtung zu ermitteln.

Unter einem Vergleich quer zur Fahrtrichtung soll analog zu einem Vergleich in Fahrtrichtung verstanden werden, dass das aktuelle Bild bzw. zumindest ein Teil davon und das Vergleichsbild bzw. zumindest ein Teil davon quer zur Fahrtrichtung pixelweise gegeneinander verschoben und verglichen werden. Das aktuell aufgenommene Bild und/oder das Vergleichsbild erstrecken sich dabei in Fahrtrichtung und quer zur Fahrtrichtung, weisen also sowohl in Fahrtrichtung, als auch quer zur Fahrtrichtung mehrere nebeneinanderliegende Pixel auf.

Bei dem genannten Vergleich in Fahrtrichtung und quer zur Fahrtrichtung wird die Lage eines Referenzmusters in einem gegenüber dem Referenzmuster grösseren Bild bestimmt. Zur Bestimmung der Position der Aufzugkabine in Fahrtrichtung wird nur die Lage des Referenzmusters in Fahrtrichtung der Aufzugkabine ausgewertet.

Damit kann die Position der Aufzugkabine in Fahrtrichtung im Aufzugschacht auch dann sicher erkannt werden, wenn die Aufzugkabine nicht absolut exakt immer entlang einer identischen Fahrkurve im Aufzugschacht verfahren wird, es also unterschiedliche Abweichungen der Fahrkurve quer zur Fahrtrichtung geben kann. Die Aufzugkabine wird zwar durch eine Kombination von einer an der Aufzugkabine angeordneten Führungseinrichtung beispielsweise in Form von Führungsschuhen und an Schachtwänden des Aufzugschachts fixierten Führungsschienen geführt, allerdings weist diese Führung immer ein wenig Spiel auf, was insbesondere bei unterschiedlichen Beladungen der Aufzugkabine zu leicht unterschiedlichen Fahrkurven innerhalb des Aufzugschachts führen kann. Dies führt dann dazu, dass die Bilderfassungseinheit bei verschiedenen Fahrten nicht immer exakt die selben Ausschnitte der Schachtbauteile oder Schachtausrüstungen bezogen auf die Richtung quer zur Fahrtrichtung aufnimmt. Da sich die auf den genannten Bildern festgehaltene Oberflächenstruktur der Schachtbauteile oder Schachtausrüstungen nicht nur in Fahrtrichtung, sondern auch in quer zur Fahrtrichtung ändert oder zumindest ändern kann, kann mit der erfindungsgemässen Kombination aus Vergleich in und quer zur Fahrtrichtung auch bei den beschriebenen unterschiedlichen Fahrkurven eine sichere Bestimmung der Position der Aufzugkabine gewährleistet werden. Das erfindungsgemässe System und das erfindungsgemässe Verfahren ermöglichen damit eine gegenüber unterschiedlichen Fahrkurven der Aufzugkabine besonders robuste Bestimmung der Position der Aufzugkabine, wobei keine speziellen Codemarker im Aufzugschacht angebracht werden müssen.

Der Aufzugschacht einer Aufzuganlage ist meist in vertikaler Richtung ausgerichtet, so dass die Fahrtrichtung der Aufzugkabine im Aufzugschacht bis auf kleine Abweichungen in Vertikalrichtung verläuft. Die Richtung quer zur Fahrtrichtung der Aufzugkabine verläuft in diesen Fall in Horizontalrichtung. Damit kann unter der genannten Position in Fahrtrichtung der Aufzugkabine die vertikale Position der Aufzugkabine oder die Höhe der Aufzugkabine im Aufzugschacht verstanden werden. Im Folgenden wird vereinfachend davon ausgegangen, dass die Fahrtrichtung wie beschrieben in Vertikalrichtung verläuft. Dies schliesst aber nicht aus, dass die Fahrrichtung zumindest abschnittsweise geneigt oder horizontal verlaufen kann. Die Fahrtrichtung wird im Folgenden auch als z-Richtung und die Richtung quer zur Fahrtrichtung als x-Richtung bezeichnet.

Die Position der Aufzugkabine in Fahrtrichtung wird von einer Aufzugsteuerung der Aufzuganlage benötigt, um die Aufzugkabine sicher und genau innerhalb des Aufzugschachts verfahren und positionieren zu können. Mittels einer zeitlichen Betrachtung des Verlaufs der Position in Fahrtrichtung kann die Geschwindigkeit und ggf. auch die Beschleunigung der Aufzugkabine bestimmt werden. Diese Grössen werden insbesondere ebenfalls von der Aufzugsteuerung verwendet. Die Geschwindigkeit und/oder die Beschleunigung der Aufzugkabine können insbesondere von der Recheneinheit, aber auch von der Aufzugsteuerung bestimmt werden.

Die Aufzugkabine ist insbesondere mit einem Tragmittel in Form eines Seils oder eines Bands mit einer Antriebsmaschine verbunden. Die Antriebsmaschine kann damit die Aufzugkabine im Aufzugschacht verfahren.

Die Bilderfassungseinheit ist insbesondere als eine Digital-Kamera beispielsweise in Form einer so genannten CCD oder CMOS-Kamera ausgeführt. Die Kamera hat beispielsweise eine Auflösung von 700 - 800 Pixel (Zeilen) auf 400 - 600 Pixel (Spalten). Die Bilderfassungseinheit kann auch als ein sonstiges bilderfassendes System ausgeführt sein, das eine Oberflächenstruktur aufnehmen und darstellen kann. Sie kann also auch beispielsweise als eine Infrarotkamera, Scanner, Röntgenaufnahmegerät, Ultraschallbilderzeugungssystem ausgeführt sein.

Jedem der genannten Pixel wird von der Bilderfassungseinheit ein so genannter Pixelwert zugeordnet, der insbesondere ein Mass für den Helligkeitswert des diesem Pixel zugeordneten Oberflächenausschnitts des aufgenommenen Gegenstands darstellt. Der Pixelwert kann beispielsweise mit 8 Bit codiert sein, also insgesamt 256 unterschiedliche Werte annehmen.

Die Bilderfassungseinheit ist dabei insbesondere so angeordnet, dass die Spalten in Fahrtrichtung (z-Richtung) der Aufzugkabine und die Zeilen quer zur Fahrtrichtung (x-Richtung) der Aufzugkabine verlaufen. Die Bilderfassungseinheit ist dabei so an der Aufzugkabine angeordnet, dass sie Bilder von anderen Funktionen dienenden Schachtbauteilen oder Schachtausrüstungen aufnehmen kann. Unter "Schachtbauteilen" sollen hier für andere Zwecke vorhandene Teile des Aufzugschachts, also beispielsweise Schachtwände verstanden werden. Unter "Schachtausrüstungen" sollen hier Teile verstanden werden, die bei der Montage der Aufzuganlage im Aufzugschacht montiert werden, also beispielsweise Führungsschienen für die Führung der Aufzugkabine. Die genannten Schachtbauteile und Schachtausrüstungen werden dabei nicht primär deshalb verbaut oder montiert, um die Bestimmung der Position der Aufzugkabine zu ermöglichen, sondern dienen einem anderen Zweck, also beispielsweise bei einer Schachtwand, den Aufzugschacht zu bilden oder bei einer Führungsschiene, die Aufzugkabine zu führen.

Das eine gespeicherte Vergleichsbild oder die mehreren gespeicherten Vergleichsbilder, mit welchen ein aktuell aufgenommenes Bild verglichen wird, werden ebenfalls von der Bilderfassungseinheit aufgenommen und anschliessend von der Recheneinheit in einem Speicher gespeichert.

Das Vergleichsbild kann insbesondere ein bei einer vorhergehenden Positionsbestimmung erfasstes Bild oder ein Teil eines solchen Bilds sein, wobei dann bei dem genannten Vergleich der Bilder eine Verschiebung des aktuellen Bilds gegenüber dem Bild der vorhergehenden Positionsbestimmung in Fahrtrichtung bestimmt wird. Aus der genannten Verschiebung und der ermittelten Position bei der vorhergehenden Positionsbestimmung kann die aktuelle Position der Aufzugkabine ermittelt werden. Diese Art der Positionsbestimmung kann als eine relative Positionsbestimmung bezeichnet werden.

Das aktuell aufgenommene Bild kann auch mit einer ganzen Reihe von gespeicherten Vergleichsbildern verglichen werden. Diese Vergleichsbilder decken den möglichen Verfahrweg der Aufzugkabine vollständig ab und können sich insbesondere überlappen. Sie können sich beispielsweise doppelt überlappen, also so, dass sich ein Vergleichsbild mit beiden angrenzenden Vergleichsbildern überlappt. Die Vergleichsbilder werden insbesondere während einer so genannten Lernfahrt aufgenommen und abgespeichert. Bei der Lernfahrt wird jedem Vergleichsbild eine Position im Aufzugschacht zugeordnet und zusammen mit dem Vergleichsbild abgespeichert, so dass mit dem genannten Vergleich der Bilder die Position der Aufzugkabine im Aufzugschacht bestimmt werden kann. Diese Art der Positionsbestimmung kann als eine absolute Positionsbestimmung bezeichnet werden. Sofern die Position der Aufzugkabine bei der vorhergehenden Positionsbestimmung bestimmt werden konnte, kann ausgehend von der dabei ermittelten Position und der Geschwindigkeit der Aufzugkabine die Anzahl der für den Vergleich notwendigen Vergleichsbilder sehr stark eingegrenzt werden. Wenn keine Informationen über die mögliche Position der Aufzugkabine vorhanden sind, beispielsweise bei einem Neustart der Recheneinheit, muss insbesondere ein Vergleich mit allen gespeicherten Vergleichsbildern durchgeführt werden.

In Ausgestaltung der Erfindung ist die Recheneinheit dazu ausgebildet, beim Vergleich des aktuell aufgenommenen Bilds mit dem gespeicherten Vergleichsbild in beiden Bildern mehrere in Fahrtrichtung und quer zur Fahrtrichtung nebeneinanderliegende Pixel zu berücksichtigen. Damit weist sowohl das für den Vergleich verwendete aktuell aufgenommene Bild, als auch das für den Vergleich verwendete Vergleichsbild mehrere sowohl in Fahrtrichtung also auch quer zur Fahrtrichtung nebeneinander angeordnete Pixel auf. Damit ist eine besonders genaue Bestimmung der Position der Aufzugkabine in Fahrtrichtung möglich.

Die Recheneinheit ist insbesondere dazu ausgebildet, beim Vergleich des aktuell aufgenommenen Bilds mit dem gespeicherten Vergleichsbild die Lage des Vergleichsbilds im aktuell aufgenommenen Bild zu bestimmen. Damit müssen nur die vergleichsweise kleinen Vergleichsbilder gespeichert werden, so dass ein kleiner Speicher für die Speicherung der Vergleichsbilder ausreichend ist. Der Speicher und damit das System zur Bestimmung der Position ist damit besonders kostengünstig.

Für den genannten Vergleich wird insbesondere nur ein Bereich des aktuell aufgenommenen Bilds verwendet, der als aktueller Vergleichsbereich bezeichnet werden kann. Der aktuelle Vergleichsbereich ist dabei ein Teil des gesamten von der Bilderfassungseinheit aufgenommenen Bilds. Der Vergleichsbereich ist insbesondere um das Zentrum des gesamten Bilds herum angeordnet.

Das Vergleichsbild hat dazu eine geringere Ausdehnung in x- und z-Richtung als der aktuelle Vergleichsbereich des aktuell aufgenommenen Bilds. Das Vergleichsbild weist beispielsweise 10 - 30 Pixel in x-Richtung und 20 - 40 Pixel in z-Richtung auf. Der aktuelle Vergleichsbereich weist beispielsweise 20 - 40 Pixel in x-Richtung und 30 - 50 Pixel in z-Richtung auf, wobei er in beiden Richtungen jeweils mehr Pixel als das Vergleichsbild aufweist.

Bei dem Vergleich der beiden Bilder wird das Vergleichsbild pixelweise sowohl in Fahrtrichtung (z-Richtung), als auch quer zur Fahrtrichtung (x-Richtung) gegenüber dem aktuellen Vergleichsbereich des aktuell aufgenommenen Bilds geschoben und jeweils ein Vergleich des Vergleichsbilds und des ausgewählten Ausschnitts des aktuellen Vergleichsbereichs durchgeführt. Es wird also ein Vergleich in Fahrtrichtung und quer zur Fahrtrichtung durchgeführt. Der ausgewählte Ausschnitt des aktuellen Vergleichsbereichs wird im Folgenden auch als das unter dem Vergleichsbild liegende Bild oder das darunterliegende Bild bezeichnet. Wenn eine Übereinstimmung bzw. eine ausreichende Ähnlichkeit zwischen dem Vergleichsbild und dem ausgewählten Ausschnitt des aktuellen Vergleichsbereichs festgestellt wird, kann aus der Lage des ausgewählten Ausschnitts innerhalb des Vergleichsbereichs auf die Position der Aufzugkabine im Aufzugschacht in Fahrtrichtung geschlossen werden.

Bei dem genannten Vergleich wird beispielsweise die so genannte Summe der quadratischen Abstände, die so genannte globale lineare Kreuzkorrelation oder eine vergleichbare Kenngrösse der Pixelwerte des Vergleichsbilds mit den Pixelwerten des ausgewählten Ausschnitts des aktuellen Vergleichsbereichs, also des unter dem Vergleichsbild liegenden Bilds berechnet. Bei einer Berechnung der Summe der quadratischen Abstände wird eine Übereinstimmung für den aktuellen Ausschnitt des aktuellen Vergleichsbereichs festgestellt, für den sich der kleinste Summenwert ergibt und dieser insbesondere kleiner als ein Grenzwert ist. Bei einer Berechnung der globalen linearen Kreuzkorrelation wird eine Übereinstimmung für den aktuellen Ausschnitt des aktuellen Vergleichsbereichs festgestellt, für den sich der grösste Korrelationswert ergibt und dieser grösser als ein Grenzwert ist.

Bei der Berechnung der Summe der quadratischen Abstände werden die Quadrate der Differenz der Pixelwerte der übereinanderliegenden Pixel von Vergleichsbild und dem aktuellen Ausschnitt des aktuellen Vergleichsbereichs des aktuellen Bilds aufsummiert.

Bei der Berechnung der globalen linearen Kreuzkorrelation werden die Produkte der Pixelwerte der übereinanderliegenden Pixel von Vergleichsbild und dem aktuellen Ausschnitt des aktuellen Vergleichsbereichs des aktuellen Bilds aufsummiert.

Die Recheneinheit ist insbesondere dazu ausgebildet, den Vergleich des aktuell aufgenommenen Bilds mit dem gespeicherten Vergleichsbild mittels einer normalisierten Kreuzkorrelation durchzuführen. Dies ermöglicht einen besonders sicheren und robusten Vergleich des Vergleichsbilds mit dem aktuellen Bild und damit eine besonders sichere und robuste Bestimmung der Position der Aufzugkabine. Dies wird dadurch ermöglicht, dass die normalisierte Kreuzkorrelation auch dann zuverlässige Ergebnisse liefert, wenn die so genannte Signalenergie nicht gleichförmig in den Bildern verteilt ist. Sie ist damit nicht stark von Intensitätsänderungen in den Bildern abhängig.

Bei der Berechnung der normalisierten Kreuzkorrelation wird das Ergebnis der oben genannten globalen linearen Kreuzkorrelation normalisiert. Dazu wird die Wurzel der Summe der Quadrate der Pixelwerte des Vergleichsbilds und die Wurzel der Summe der Quadrate der Pixelwerte des darunterliegenden Bilds berechnet. Für die Berechnung der normalisierten Kreuzkorrelation wird das Ergebnis der oben genannten globalen linearen Kreuzkorrelation durch das Produkt der beiden genannten Wurzeln dividiert. Je grösser das Ergebnis der normalisierten Kreuzkorrelation ist, desto grösser ist die Ähnlichkeit des Vergleichsbilds und des aktuell darunterliegenden Bilds.

In Ausgestaltung der Erfindung ist die Recheneinheit dazu ausgebildet, bei der normalisierten Kreuzkorrelation Mittelwerte der Pixelwerte der verglichenen Bilder zu berücksichtigen. Dies macht den Vergleich der Bilder besonders unempfindlich gegen unterschiedliche mittlere Pixelwerte also insbesondere gegen eine unterschiedliche mittlere Helligkeit zwischen dem Vergleichsbild und dem darunterliegenden Bild.

Dazu wird insbesondere ein so genannter Korrelationskoeffizient berechnet. Dazu wird als Zähler von jedem Pixelwert des Vergleichsbilds und des darunterliegenden Bilds zuerst der jeweilige Mittelwert aller Pixelwerte des Vergleichsbilds bzw. des darunterliegenden Bilds abgezogen und anschliessend die Produkte der Ergebnisse der Subtraktionen von übereinanderliegenden Pixeln aufsummiert. Für eine Normalisierung werden sowohl für das Vergleichsbild als auch für das darunterliegende Bild jeweils die Ergebnisse der oben genannten Subtraktion von Pixelwert und jeweiligen Mittelwert für alle Pixel quadriert und anschliessend aufsummiert. Die Normalisierung wird durchgeführt, indem der genannte Zähler durch das Produkt der Wurzeln der genannten Summen dividiert wird.

In Ausgestaltung der Erfindung ist die Recheneinheit dazu ausgebildet, als Vergleichsbild einen nachbearbeiteten Ausschnitt eines von der Bilderfassungseinheit aufgenommenen Bilds zu speichern, insbesondere ist die Recheneinheit dazu ausgebildet, bei der genannten Nachbearbeitung vom Pixelwert eines jeden Pixels den Mittelwert aller Pixelwerte des Ausschnitts abzuziehen. Der Mittelwert der Pixelwerte des so bestimmten Vergleichsbilds ist damit 0. Damit wird ein besonders schneller und wenig rechenintensiver Vergleich vom Vergleichsbild mit dem aktuell aufgenommenen Bild ermöglicht.

In Ausgestaltung der Erfindung ist die Recheneinheit dazu ausgebildet, eine die Struktur des genannten Ausschnitts kennzeichnende Strukturkenngrösse zu bestimmen, mit abzuspeichern und beim Vergleich des aktuell aufgenommenen Bilds mit dem gespeicherten Vergleichsbild zu berücksichtigen. Für die Bestimmung der genannten Strukturkenngrösse wird insbesondere zuerst von jedem Pixelwert des Vergleichsbilds der Mittelwert aller Pixelwerte des Vergleichsbilds abgezogen. Dann werden die Ergebnisse der Subtraktion für alle Pixel des Vergleichsbilds quadriert und anschliessend aufsummiert. Die so erzeugte Strukturkenngrösse ist damit die so genannte Bildenergie des Ergebnisses der genannten Subtraktion des Mittelwerts. Diese Summe oder auch die Wurzel aus dieser Summe kann als Vergleichsgrösse abgespeichert und beim Vergleich der Bilder verwendet werden.

Die Strukturkenngrösse kann insbesondere für eine schnelle und wenig rechenintensive Durchführung des Vergleichs des Vergleichsbilds mit dem aktuell aufgenommenen Bild verwendet werden. Es ist auch möglich, dass mit Hilfe der Strukturkenngrösse geprüft wird, ob ein Vergleichsbild überhaupt für die beschriebene Positionsbedingung verwendet werden kann. Dazu kann beispielsweise überprüft werden, ob die Strukturkenngrösse des Vergleichsbilds grösser als ein Schwellwert ist.

Die genannten Ausgestaltungen der Recheneinheit führen zu entsprechenden Ausgestaltungen des erfindungsgemässen Verfahrens.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:

Fig. 1    eine schematische Darstellung einer Aufzuganlage mit einem System zur Bestimmung der Position einer in einem Aufzugschacht verfahrbar angeordneten Aufzugkabine,

Fig. 2    ein Vergleichsbild innerhalb eines aktuellen Vergleichsbereichs eines aktuell aufgenommenen Bilds einer Schachtausrüstung des Aufzugschachts und

Fig. 3    Korrelationskoeffizienten eines Vergleichsbilds mit einem darunterliegenden Bild eines aktuellen Vergleichsbereichs eines aktuell aufgenommenen Bilds bei unterschiedlichen Verschiebungen quer zu einer Fahrtrichtung (x-Richtung) und einer konstanten Verschiebung in Fahrtrichtung (z-Richtung) der Aufzugkabine.

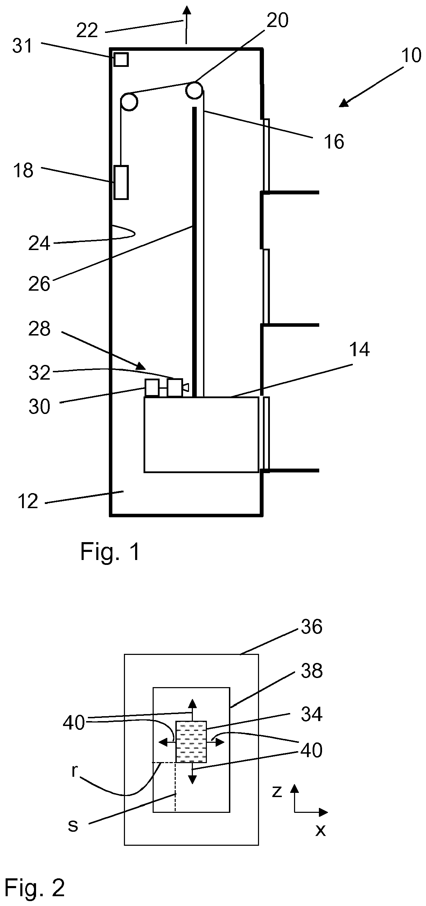

Gemäss Fig. 1 verfügt eine Aufzuganlage 10 über einen in vertikaler Richtung ausgerichteten Aufzugschacht 12. Innerhalb des Aufzugschachts 12 ist eine Aufzugkabine 14 angeordnet, welche über ein Tragmittel 16 in Form eines flexiblen Bands oder eines Seils mit einem Gegengewicht 18 auf bekannte Weise verbunden ist. Das Tragmittel 16 verläuft ausgehend von der Aufzugkabine 14 über eine Antriebsscheibe 20, welche von einer nicht dargestellten Antriebsmaschine angetrieben werden kann. Mittels der Antriebsmaschine und dem Tragmittel 16 kann die Aufzugkabine 14 im Aufzugschacht 12 auf und ab verfahren werden. Die Aufzugkabine 14 kann damit in oder entgegen einer Fahrtrichtung 22, welche in vertikaler Richtung nach oben verläuft, im Aufzugschacht 12 verfahren werden.

An einer Schachtwand 24 des Aufzugschachts 12 ist eine Führungsschiene 26 fixiert, die in Fahrtrichtung 22 verläuft. Die Schachtwand 24 kann dabei als ein Schachtbauteil und die Führungsschiene 26 als eine Schachtausrüstung bezeichnet werden. Beim Verfahren der Aufzugkabine 14 wird diese über nicht dargestellte Führungsschuhe entlang der Führungsschiene 26 geführt.

Auf der Aufzugkabine 14 ist ein System 28 zur Bestimmung der Position der Aufzugkabine 14 angeordnet. Das System 28 verfügt über eine Recheneinheit 30 und eine Bilderfassungseinheit 32. Die ist als eine Digitalkamera ausgeführte Bilderfassungseinheit 32 ist so ausgerichtet, dass sie Bilder von der Führungsschiene 26 aufnehmen kann. Sie übermittelt die aus einzelnen Pixeln bestehenden Bilder der Führungsschiene 26 an die Recheneinheit 30, welche ein aktuell aufgenommenes Bild mit wenigstens einem gespeicherten Vergleichsbild der Führungsschiene 26 vergleicht, um eine aktuelle Position der Aufzugkabine 14 in Fahrtrichtung 22 zu ermitteln. Die Recheneinheit 30 übermittelt die aktuelle Position der Aufzugkabine 14 über eine nicht dargestellte Signalverbindung an eine im Aufzugschacht 12 angeordnete Aufzugsteuerung 31, welche die Position der Aufzugkabine 14 für die Steuerung der Aufzuganlage 10 verwendet.

Die Recheneinheit muss nicht an der Aufzugkabine angeordnet sein. Sie kann auch stationär im Aufzugschacht angeordnet sein und mit der Bilderfassungseinheit in Signalverbindung stehen. Die Bilderfassungseinheit könnte auch Bilder von der Schachtwand aufnehmen und an die Recheneinheit übermitteln.

Zur Ermittlung der aktuellen Position der Aufzugkabine 14 im Aufzugschacht 12 vergleicht die Recheneinheit 30 ein in Fig. 2 dargestelltes, abgespeichertes Vergleichsbild 34 mit einem von der Bilderfassungseinheit 32 aktuell aufgenommenen Bild 36.

In einem nicht dargestellten Speicher der Recheneinheit 30 sind Vergleichsbilder für eine relative und eine absolute Positionsbestimmung gespeichert. Für die absolute Positionsbestimmung ist eine Vielzahl von Vergleichsbildern 34 abgespeichert. Diese Vergleichsbilder 34 werden während einer so genannten Lernfahrt bei der Inbetriebnahme des Systems 28 aus aktuellen Bildern der Bilderfassungseinheit 32 abgeleitet und gespeichert. Bei der Lernfahrt wird die Aufzugkabine 14 mit dem System 28 entlang des gesamten Verfahrwegs der Aufzugkabine 14 im Aufzugschacht 12 verfahren. Die Recheneinheit 30 leitet aus den von der Bilderfassungseinheit 32 aufgenommenen Bildern einzelne Vergleichsbilder 34 ab und ordnet ihnen eine Position im Aufzugschacht 12 zu. Die Recheneinheit 30 leitet dabei die Vergleichsbilder 34 so ab, dass diese sich jeweils doppelt überlappen. Sie überlappen sich insbesondere so, dass jeweils zwei übernächste Vergleichsbilder aneinander anstossen. Die gespeicherten Vergleichsbilder 34 decken damit den gesamten Verfahrweg der Aufzugkabine 14 ab. Sobald ein Vergleichsbild 34 in einem aktuellen Bild 36 der Bilderfassungseinheit 32 erkannt wird, kann mit Hilfe der ebenfalls abgespeicherten Position des Vergleichsbilds 34 im Aufzugschacht 12 auf die Position der Aufzugkabine 14 in Fahrtrichtung 22 geschlossen werden.

Um während der Lernfahrt ein Vergleichsbild 34 aus einem aktuell aufgenommenen Bild der Bilderfassungseinheit 32 abzuleiten, wird das aktuell aufgenommene Bild von der Recheneinheit 30 nachbearbeitet. Dazu wählt die Recheneinheit 30 zuerst im Zentrum des aktuell aufgenommenen Bilds einen Ausschnitt aus. Anschliessend berechnet die Recheneinheit 30 den Mittelwert aller Pixelwerte des ausgewählten Ausschnitts und zieht von jedem Pixelwert den berechneten Mittelwert ab. Das Ergebnis dieser Nachbearbeitung wird als Vergleichsbild 34 abgespeichert. Zusätzlich können weitere Nachbearbeitungen, wie beispielsweise Tief- und oder Hochpassfilterungen durchgeführt werden.

Zusätzlich bestimmt die Recheneinheit 30 für jedes nachbearbeitete und abgespeicherte Vergleichsbild 34 eine Strukturkenngrösse und speichert diese zusammen mit dem Vergleichsbild 34 ab. Die Recheneinheit 30 geht dabei von einem wie oben beschrieben nachbearbeiteten Bild aus. Sie quadriert die Pixelwerte aller Pixel und summiert sie auf. Das Ergebnis dieser Summation oder auch die Wurzel daraus wird zusammen mit dem Vergleichsbild 34 abgespeichert.

Das Vergleichsbild für die relative Positionsbestimmung wird aus einem Bild der Bilderfassungseinheit 32 der vorhergehenden Positionsbestimmung abgeleitet. Dazu wird ein Ausschnitt aus diesem Bild ausgewählt. Die Nachbearbeitung läuft analog zur Nachbearbeitung der Vergleichsbilder 34 für die absolute Positionsbestimmung ab. Der genannte Ausschnitt wird insbesondere nicht im Bereich des Zentrums, sondern in einem in der aktuellen Fahrtrichtung der Aufzugkabine liegenden Bereichs des genannten Bilds ausgewählt.

Um im normalen Betrieb der Aufzuganlage 10 die Position der Aufzugkabine 14 in Fahrtrichtung 22 zu bestimmen, vergleicht die Recheneinheit 30 ein Vergleichsbild 34 mit einem aktuell aufgenommenen Bild 36 der Bilderfassungseinheit 32 sowohl in, als auch quer zur Fahrtrichtung 22. Die Recheneinheit 30 prüft dazu, ob ein Vergleichsbild 34 in einem aktuellen Vergleichsbereich 38 des aktuell aufgenommenen Bilds 36 enthalten ist. Ist dies der Fall, wird gleichzeitig die Lage des Vergleichsbilds 34 im aktuellen Vergleichsbereich 38 bestimmt. Im Folgenden wird davon ausgegangen, dass das Vergleichsbild 34 im aktuellen Vergleichsbereich 38 enthalten ist.

Um die Lage des Vergleichsbilds 34 im aktuellen Vergleichsbereich 38 zu bestimmen, vergleicht die Recheneinheit 30 das Vergleichsbild 34 und den aktuellen Vergleichsbereich 38 des aktuell aufgenommenen Bilds 36 sowohl in Fahrtrichtung (z-Richtung) als auch quer zur Fahrtrichtung (x-Richtung). Dazu wird das Vergleichsbild 34 pixelweise sowohl in Fahrtrichtung (z-Richtung), als auch quer zur Fahrtrichtung (x-Richtung) gegenüber dem aktuellen Vergleichsbereich 38 geschoben und für jede Stellung ein Korrelationskoeffizient zwischen dem Vergleichsbild 34 und dem unter dem Vergleichsbild 34 liegende Bild des Vergleichsbereichs 38 berechnet. Die Verschiebung des Vergleichsbilds 34 ist in der Fig. 2 durch die Pfeile 40 symbolisiert.

Der Korrelationskoeffizient wird nach folgender Formel berechnet:

$$k(r,s) = \frac{\sum_{(i,j)\in R}(I(r+i,s+j) - \bar{I}(r,s)) * (R(i,j) - \bar{R})}{\sqrt{\sum_{(i,j)\in R}(I(r+i,s+j) - \bar{I}(r,s))^2} * \sqrt{\sum_{(i,j)\in R}(R(i,j) - \bar{R})^2}}$$

mit

| | |
|---|---|
| r | = Verschiebung des Vergleichsbilds in x-Richtung, |
| s | = Verschiebung des Vergleichsbilds in z-Richtung, |
| $R(i,j)$ | = Pixelwerte des Vergleichsbilds bei der x-Position i und der z-Position j, |
| $I(r+i, s+j)$ | = Pixelwerte des aktuellen Vergleichsbereichs an der x-Position r+i und der z-Position s+j, |
| $R$ | = Mittelwert aller Pixelwerte des Vergleichsbilds, |
| $I(r,s)$ | = Mittelwert aller Pixelwerte des aktuellen Vergleichsbereichs unter dem um r in x-Richtung und s in z-Richtung verschobenen Vergleichsbilds. |

Da das Vergleichsbild 34 wie oben beschrieben vor dem Abspeichern von der Recheneinheit 30 so nachbearbeitet wurde, dass von jedem Pixelwert der Mittelwert aller Pixelwerte des Vergleichsbild 34 abgezogen wurde, muss der Term

$$(R(i,j) - \bar{R})$$

bei der Berechnung des Korrelationskoeffizienten nicht mehr ausgewertet werden, sondern es können direkt die Pixelwerte des Vergleichsbilds 34 verwendet werden.

Ausserdem wird wie oben beschrieben eine Strukturkenngrösse des Vergleichsbilds 34 mit abgespeichert, die direkt für die Berechnung des Korrelationskoeffizienten verwendet werden kann. Wie oben beschrieben wird als Strukturkenngrösse der Term:

$$\sum_{(i,j)\in R}(R(i,j) - \bar{R})^2$$

berechnet und entweder das Ergebnis oder die Wurzel daraus abgespeichert. Die Strukturkenngrösse wird damit beim Vergleich des aktuell aufgenommenen Bilds 38 mit dem gespeicherten Vergleichsbild 34 berücksichtigt.

Der Korrelationskoeffizient wird für jede mögliche Lage des Vergleichsbilds 34 im aktuellen Vergleichsbereich 38 berechnet, also für jede mögliche Verschiebung um r in x-Richtung und s in z-Richtung. Die Korrelationskoeffizienten für alle möglichen r- und s-Werte ergeben eine dreidimensionale Fläche. Der maximale Korrelationskoeffizient der gesamten Fläche kennzeichnet die Lage des Vergleichsbilds 34 im aktuellen Vergleichsbereich 38 mit der höchsten Übereinstimmung. Unter der oben genannten Voraussetzung, dass das Vergleichsbild 34 im aktuellen Vergleichsbereich 38 enthalten ist, kennzeichnet das genannte Maximum die Lage des Vergleichsbilds 34, an der es eine Übereinstimmung von Vergleichsbild 34 und dem darunterliegenden Bild gibt. Als zusätzliche Prüfung kann geprüft werden, ob der maximale Korrelationswert grösser als ein Schwellwert ist. Mit der Information über die Lage des Vergleichsbilds 34 im aktuellen Vergleichsbereich 38 des aktuell aufgenommenen Bilds 36 kann entweder über eine relative oder eine absolute Positionsbestimmung die Position der Aufzugkabine 14 im Aufzugschacht 12 in Fahrtrichtung 22 bestimmt werden.

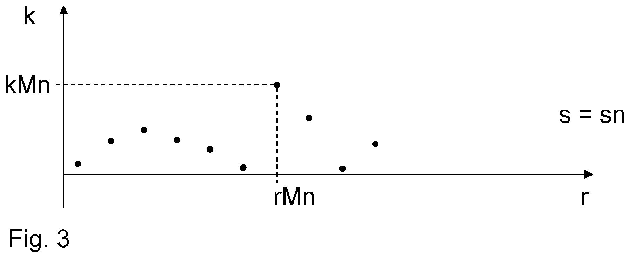

In Fig. 3 sind beispielhaft die Korrelationskoeffizienten über den möglichen r- Werten, also den möglichen Verschiebungen in x-Richtung und einem festen s-Wert, also einer konstanten Verschiebung in z-Richtung dargestellt.

Gemäss Fig. 3 erreicht der Korrelationskoeffizient bei einem s-Wert von sn und einem r-Wert von rMn den maximalen Wert kMn. Das bedeutet, dass das Vergleichsbild 34 bei einer festen Verschiebung von sn in z-Richtung bei einer Verschiebung um rMn in x-Richtung die grösste Übereinstimmung mit dem darunterliegenden Bild des aktuellen Vergleichsausschnitts 38 des aktuell aufgenommenen Bilds 36 hat.

Die Recheneinheit 30 bestimmt für jeden möglichen s-Wert s=sn die den jeweils (lokalen) maximalen Korrelationskoeffizient kMn und die zugehörige Verschiebung rMn in x-Richtung. Anschliessend bestimmt die Recheneinheit 30 den maximalen Korrelationswert kMax aller bestimmten (lokalen) maximalen Korrelationskoeffizienten kMn, welcher das absolute Maximum der Korrelationskoeffizienten und damit der beschriebenen dreidimensionalen Fläche darstellt.

Aus den zugehörigen s- und r-Werten des absoluten Maximums des Korrelationskoeffizienten ergibt sich die Lage des Vergleichsbilds 34 im aktuellen Vergleichsbereich 38.

Die beschriebene Berechnung des Korrelationskoeffizienten kann als ein Spezialfall einer normalisierten Kreuzkorrelation angesehen werden, bei der die Mittelwerte der Pixelwerte der verglichenen Bilder berücksichtigt werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. System zur Bestimmung der Position einer in einem Aufzugschacht (12) verfahrbar angeordneten Aufzugkabine (14) einer Aufzuganlage (10), mit

   - einer Recheneinheit (30) und
   - einer Bilderfassungseinheit (32), welche an der Aufzugkabine (14) angeordnet und dazu ausgebildet ist, aus einzelnen Pixeln bestehende Bilder (36) von anderen Funktionen dienenden Schachtbauteilen (24) oder Schachtausrüstungen (26) aufzunehmen und an die Recheneinheit (30) zu übermitteln,

   wobei die Recheneinheit (30) dazu ausgebildet ist, ein aktuell aufgenommenes Bild (36) mit wenigstens einem gespeicherten Vergleichsbild (34) der genannten Schachtbauteile (24) oder Schachtausrüstungen (26) in einer Fahrtrichtung (22) der Aufzugkabine (14) zu vergleichen, um eine aktuelle Position der Aufzugkabine (14) in Fahrtrichtung (22) zu ermitteln,
   **dadurch gekennzeichnet, dass**
   die Recheneinheit (30) dazu ausgebildet ist, das aktuell aufgenommene Bild (36) mit dem gespeicherten Vergleichsbild (34) auch quer zur Fahrtrichtung (22) zu vergleichen, um die aktuelle Position der Aufzugkabine (14) in Fahrtrichtung (22) zu ermitteln.

2. System nach Anspruch 1,
   **dadurch gekennzeichnet, dass**
   die Recheneinheit (30) dazu ausgebildet ist, beim Vergleich des aktuell aufgenommenen Bilds (36) mit dem gespeicherten Vergleichsbild (34) in beiden Bildern mehrere in Fahrtrichtung (22) und quer zur Fahrtrichtung (22) nebeneinanderliegende Pixel zu berücksichtigen.

3. System nach Anspruch 1 oder 2,
   **dadurch gekennzeichnet, dass**
   die Recheneinheit (30) dazu ausgebildet ist, beim Vergleich des aktuell aufgenommenen Bilds (36) mit dem gespeicherten Vergleichsbild (34) die Lage des Vergleichsbilds (34) im aktuell aufgenommenen Bild (36) zu bestimmen.

4. System nach Anspruch 1, 2 oder 3,
   **dadurch gekennzeichnet, dass**
   die Recheneinheit (30) dazu ausgebildet ist, den Vergleich des aktuell aufgenommenen Bilds (36) mit dem gespeicherten Vergleichsbild (34) mittels einer normalisierten Kreuzkorrelation durchzuführen.

5. System nach Anspruch 4,
   **dadurch gekennzeichnet, dass**
   die Recheneinheit (30) dazu ausgebildet ist, bei der normalisierten Kreuzkorrelation Mittelwerte der Pixelwerte der verglichenen Bilder zu berücksichtigen.

6. System nach einem der Ansprüche 1 bis 5,
   **dadurch gekennzeichnet, dass**
   die Recheneinheit (30) dazu ausgebildet ist, als Vergleichsbild (34) ein nachbearbeitetes Bild der Bilderfassungseinheit (32) zu speichern.

7. System nach Anspruch 6,
   **dadurch gekennzeichnet, dass**

die Recheneinheit (30) dazu ausgebildet ist, als Vergleichsbild (34) einen nachbearbeiteten Ausschnitt eines von der Bilderfassungseinheit (32) aufgenommenen Bilds zu speichern.

8. System nach Anspruch 6 oder 7,
   **dadurch gekennzeichnet, dass**
   die Recheneinheit (30) dazu ausgebildet ist, bei der genannten Nachbearbeitung vom Pixelwert eines jeden Pixels den Mittelwert aller Pixelwerte des Ausschnitts abzuziehen.

9. System nach Anspruch 7 oder 8,
   **dadurch gekennzeichnet, dass**
   die Recheneinheit (30) dazu ausgebildet ist, eine die Struktur des Ausschnitts kennzeichnende Strukturkenngrösse zu bestimmen, mit abzuspeichern und beim Vergleich des aktuell aufgenommenen Bilds (36) mit dem gespeicherten Vergleichsbild (34) zu berücksichtigen.

10. Verfahren zur Bestimmung der Position einer in einem Aufzugschacht (12) verfahrbar angeordneten Aufzugkabine (14) einer Aufzuganlage (10), bei welchem mit einer an der Aufzugkabine (14) angeordneten Bilderfassungseinheit (32) aus einzelnen Pixeln bestehende Bilder (36) von anderen Funktionen dienenden Schachtbauteilen (24) oder Schachtausrüstungen (26) aufgenommen und ein aktuell aufgenommenes Bild (36) mit wenigstens einem gespeicherten Vergleichsbild (34) der genannten Schachtbauteile (24) oder Schachtausrüstungen (26) in einer Fahrtrichtung (22) der Aufzugkabine (14) verglichen werden, um eine aktuelle Position der Aufzugkabine (14) in Fahrtrichtung (22) zu ermitteln,
    **dadurch gekennzeichnet, dass**
    das aktuell aufgenommene Bild (36) mit dem gespeicherten Vergleichsbild (34) auch quer zur Fahrtrichtung (22) verglichen wird, um die aktuelle Position der Aufzugkabine (14) in Fahrtrichtung (22) zu ermitteln.

## Claims

1. System for determining the position of an elevator car (14) of an elevator installation (10), which car is movably arranged in an elevator shaft (12), the system having

   - a computer unit (30) and
   - an imaging unit (32) that is arranged on the elevator car (14) and is designed to capture images (36) of shaft components (24) or shaft equipment (26) used for other functions, which images consist of individual pixels, and transmit said images to the computing unit (30),

   the computer unit (30) being designed to compare a currently captured image (36) with at least one stored comparison image (34) of the aforesaid shaft components (24) or shaft equipment (26) in a direction of travel (22) of the elevator car (14) in order to determine a current position of the elevator car (14) in the direction of travel (22),
   **characterized in that**
   the computer unit (30) is also designed to compare the currently captured image (36) with the stored comparison image (34) transversely to the direction of travel (22) in order to determine the current position of the elevator car (14) in the direction of travel (22).

2. System according to claim 1,
   **characterized in that**
   the computer unit (30) is designed to take into account, in both images, a plurality of pixels adjacent to one another in the direction of travel (22) and transverse to the direction of travel (22) during the comparison of the currently captured image (36) with the stored comparison image (34).

3. System according to either claim 1 or claim 2,
   **characterized in that**
   the computer unit (30) is designed to determine the position of the comparison image (34) in the currently captured image (36) during the comparison of the currently captured image (36) with the stored comparison image (34).

4. System according to either claim 1, claim 2 or claim 3,
   **characterized in that**
   the computer unit (30) is designed to compare the currently captured image (36) with the stored comparison image (34) by means of a normalized cross-correlation.

5. System according to claim 4,
   **characterized in that**
   the computer unit (30) is designed to take into account mean values of the pixel values of the compared images during the normalized cross-correlation.

6. System according to any of claims 1 to 5,
   **characterized in that**
   the computer unit (30) is designed to store a post-processed image of the imaging unit (32) as a comparison image (34).

7. System according to claim 6,
   **characterized in that**
   the computer unit (30) is designed to store a post-processed portion of an image captured by the imaging unit (32) as a comparison image (34).

8. System according to either claim 6 or claim 7,
   **characterized in that**
   the computer unit (30) is designed to subtract the mean value of all pixel values of the portion from the pixel value of each pixel during the aforesaid post-processing.

9. System according to either claim 7 or claim 8,
   **characterized in that**
   the computer unit (30) is designed to determine and store a structure parameter characterizing the structure of the portion and to take said parameter into account during the comparison of the currently captured image (36) with the stored comparison image (34).

10. Method for determining the position of an elevator car (14) of an elevator installation (10), which car is movably arranged in an elevator shaft (12), in which method images (36) of shaft components (24) or shaft equipment (26) used for other functions, which images consist of individual pixels, are captured by an imaging unit (32) arranged on the elevator car (14) and a currently captured image (36) is compared with at least one stored comparison image (34) of the aforesaid shaft components (24) or shaft equipment (26) in a direction of travel (22) of the elevator car (14) in order to determine a current position of the elevator car (14) in the direction of travel (22),
    **characterized in that**
    the currently captured image (36) is also compared with the stored comparison image (34) transversely to the direction of travel (22) in order to determine the current position of the elevator car (14) in the direction of travel (22).


**Revendications**

1. Système destiné à la détermination de la position d'une cabine d'ascenseur (14) agencée mobile dans une cage d'ascenseur (12) d'une installation d'ascenseur (10), comportant

   - une unité de calcul (30) et
   - une unité de capture d'images (32) qui est disposée sur la cabine d'ascenseur (14) et qui est conçue pour enregistrer des images (36) constituées de pixels individuels de composants de cage (24) ou d'équipements de cage (26) servant à d'autres fonctions et pour les transmettre à l'unité de calcul (30),

   l'unité de calcul (30) étant conçue pour comparer une image actuellement enregistrée (36) avec au moins une image de comparaison stockée (34) desdits composants de cage (24) ou équipements de cage (26) dans un sens de déplacement (22) de la cabine d'ascenseur (14), afin de déterminer une position actuelle de la cabine d'ascenseur (14) dans le sens de déplacement (22),
   **caractérisé en ce**
   **que** l'unité de calcul (30) est conçue pour comparer également l'image actuellement enregistrée (36) avec l'image de comparaison stockée (34) transversalement au sens de déplacement (22) afin de déterminer la position actuelle de la cabine d'ascenseur (14) dans le sens de déplacement (22).

**2.** Système selon la revendication 1,
**caractérisé en ce**
**que** l'unité de calcul (30) est conçue, lors de la comparaison de l'image actuellement enregistrée (36) avec l'image de comparaison stockée (34), pour prendre en compte plusieurs pixels juxtaposés dans le sens de déplacement (22) et transversalement au sens de déplacement (22) dans les deux images.

**3.** Système selon la revendication 1 ou 2,
**caractérisé en ce**
**que** l'unité de calcul (30) est conçue, lors de la comparaison de l'image actuellement enregistrée (36) avec l'image de comparaison stockée (34), pour déterminer l'emplacement de l'image de comparaison (34) dans l'image actuellement enregistrée (36).

**4.** Système selon la revendication 1, 2 ou 3,
**caractérisé en ce**
**que** l'unité de calcul (30) est conçue pour effectuer la comparaison de l'image actuellement enregistrée (36) avec l'image de comparaison stockée (34) au moyen d'une corrélation croisée normalisée.

**5.** Système selon la revendication 4,
**caractérisé en ce**
**que** l'unité de calcul (30) est conçue pour prendre en compte des valeurs moyennes des valeurs de pixels des images comparées lors de la corrélation croisée normalisée.

**6.** Système selon l'une des revendications 1 à 5,
**caractérisé en ce**
**que** l'unité de calcul (30) est conçue pour stocker une image post-traitée de l'unité de capture d'images (32) en tant qu'image de comparaison (34).

**7.** Système selon la revendication 6,
**caractérisé en ce**
**que** l'unité de calcul (30) est conçue pour stocker une coupe post-traitée d'une image enregistrée par l'unité de capture d'images (32) en tant qu'image de comparaison (34).

**8.** Système selon la revendication 6 ou 7,
**caractérisé en ce**
**que** l'unité de calcul (30) est conçue pour soustraire la valeur moyenne de toutes les valeurs de pixels de la coupe à la valeur de pixel de chaque pixel lors dudit post-traitement.

**9.** Système selon la revendication 7 ou 8,
**caractérisé en ce**
**que** l'unité de calcul (30) est conçue pour déterminer une variable de structure caractérisant la structure de la coupe, pour la stocker et pour la prendre en compte lors de la comparaison de l'image actuellement enregistrée (36) avec l'image de comparaison stockée (34).

**10.** Procédé destiné à la détermination de la position d'une cabine d'ascenseur (14) agencée mobile dans une cage d'ascenseur (12) d'une installation d'ascenseur (10), dans lequel des images (36) constituées de pixels individuels de composants de cage (24) ou d'équipements de cage (26) servant à d'autres fonctions sont enregistrées au moyen d'une unité de capture d'images (32) disposée sur la cage d'ascenseur (14) et une image actuellement enregistrée (36) est comparée à au moins une image de comparaison stockée (34) desdits composants de cage (24) ou équipements de cage (26) dans un sens de déplacement (22) de la cabine d'ascenseur (14), afin de déterminer une position actuelle de la cabine d'ascenseur (14) dans le sens de déplacement (22),
**caractérisé en ce**
**que** l'image actuellement enregistrée (36) est également comparée à l'image de comparaison stockée (34) transversalement au sens de déplacement (22) afin de déterminer la position actuelle de la cabine d'ascenseur (14) dans le sens de déplacement (22).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1232988 A1